# EUROPEAN PATENT SPECIFICATION

(11) **EP 4 474 126 B1**
(45) Date of publication and mention of the grant of the patent: **06.05.2026**
(21) Application number: 23898190.6
(22) Date of filing: 22.11.2023
(51) Int. Cl.: B29C 31/00, H01M 50/105, H01M 50/129, B29C 43/34, B29L 31/34, H01M 10/04

(54) **DEVICE FOR SUPPLYING POUCH FILM FOR SECONDARY BATTERY**
VORRICHTUNG ZUR ZUFÜHRUNG EINER BEUTELFOLIE FÜR EINE SEKUNDÄRBATTERIE
DISPOSITIF D'ACHEMINEMENT DE FILM DE SACHET POUR BATTERIE SECONDAIRE

(30) Priority: 02.12.2022 KR 20220166330
(43) Date of publication of application: 11.12.2024
(73) Proprietor: LG Energy Solution, Ltd., Seoul 07335 (KR)
(72) Inventor: KIM, Jae Woon, Daejeon 34122 (KR)
(74) Representative: Goddar, Heinz J.
(86) International application number: PCT/KR2023/018913
(87) International publication number: WO 2024/117659

(56) References cited:
- CN-A- 103 378 320
- CN-U- 206 574 811
- CN-U- 217 144 956
- JP-A- 2001 176 066
- JP-A- 2015 081 178
- KR-A- 20000 046 713
- KR-A- 20220 092 310
- US-B2- 10 017 348
- US-B2- 6 752 915

## Description

### [Technical Field]

The present invention relates to a pouch film supply device for secondary batteries.

More specifically, the present invention relates to a pouch film supply device for measuring and managing inclinations of guide rollers guiding a pouch film and adjusting the inclinations when necessary to prevent the pouch film from being meandered.

This application claims the benefit of priority based on Korean Patent Application No. 10-2022-0166330, filed on December 2, 2022.

### [Background Art]

A pouch type secondary battery is manufactured by accommodating an electrode assembly in a pouch type battery case obtained by molding a pouch film.

The pouch type battery case is easily deformable and thus may be manufactured in various forms, and is light in weight, thus increasing energy density per weight of the battery. The pouch film may include an outer sheath layer, a metal barrier layer, and an inner sealant layer.

The relevant prior art for the present invention is given by Korean Patent Laid-Open Publication No. 10-2022-0092310 and the documents US 10 017 348 B2 and US 6 752 915 B2. In particular, document US 10 017 346 B2 discloses a film supply device for a secondary battery, comprising a plurality of first guide rollers installed between a film inlet (i.e an entry zone) and a film outlet (i.e an exit zone) to be spaced apart from each other, and configured to guide a film, wherein one side of each of the plurality of first guide rollers is fixedly supported; a plurality of second guide rollers installed below the plurality of first guide rollers between the film inlet and the film outlet to be spaced apart from each other, and configured to guide the film; and an inclination measurement member provided on another side of each of the first guide rollers to measure at least one of a vertical inclination and a horizontal inclination of each of the first guide rollers.

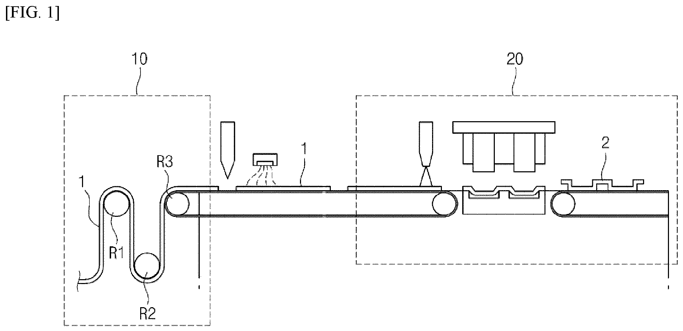

FIG. 1 illustrates a general pouch type battery case molding device.

As shown in FIG. 1, a pouch film 1 is supplied to a pouch molding part 20 by a pouch film supply device 10 equipped with a plurality of guide rollers R1, R2, and R3, and is formed as a pouch type case 2 of a certain form by the pouch forming part 20.

To improve the accuracy of processing the pouch type case 2 by the pouch forming part 20, the pouch film 1 to be supplied to the pouch forming part 20 should maintain a correct path while driving. When the pouch film 1 is driven meanderingly, a defect may occur in the pouch type case 2 processed by the pouch forming part 20.

However, among the plurality of guide rollers of the pouch film supply device 10, an upper guide roller is a cantilever type guide roller, only one side of which is fixedly supported and thus another side thereof that is not fixedly supported may sag downward. Otherwise, a direction in which the guide rollers extend may be slanted to the left or right. That is, the guide rollers may be inclined vertically or horizontally and degrees of inclination thereof are slightly different from each other. In this case, a driving path of the pouch film 1 guided along the plurality of guide rollers is not uniform. As a result, the pouch film supplied through the pouch film supply device 10 is driven meanderingly, thus increasing a possibility that a defect will occur in the pouch forming part 20.

Meanwhile, a series of pouch film processing processes may be interrupted due to an event occurring in a cutting part or a forming part below the pouch film supply device. Otherwise, the processing processes may be stopped to replace a pouch film with another. In this case, all subsequent pouch film supply processes are stopped and thus work productivity decreases. In this case, when a sufficient driving path of the pouch film is secured by the pouch film supply device, a maintenance time or a time required to replace the pouch film, which corresponds to a time required for the driving of the pouch film, can be secured in a subsequent process even when an event occurs in a subsequent processing process.

Therefore, there is a need to develop a technique for managing inclinations of guide rollers or adjusting the inclinations to be the same by a pouch film supply device.

In addition, there is a need to develop a technique for securing continuity of subsequent processes to increase work productivity even when part of pouch film supply and processing processes is stopped.

### [Disclosure]

### [Technical Problem]

To address the above-described problems, the present invention is directed to managing inclinations of guide rollers guiding a pouch film by measuring and monitoring the inclinations of the guide rollers to prevent the pouch film from being driven meanderingly.

The present invention is also directed to providing a pouch film supply device capable of reliably preventing a pouch film from being driven meanderingly by adjusting inclinations of guide rollers on the basis of measured inclinations.

The present invention is also directed to providing a pouch film supply device for adjusting a driving path of a pouch film by lifting guide rollers to secure a maintenance time and performing a pouch film supply process without interruption, even when a problem occurs in a pouch film processing process.

[Technical Solution]The invention is defined by the subject matter of the independent claims. Advantageous embodiments are subject to the dependent claims.

According to an aspect of the present invention, a pouch film supply device for a secondary battery includes: a plurality of first guide rollers installed between a pouch film inlet and a pouch film outlet to be spaced apart from each other, and configured to guide a pouch film, wherein one side of each of the plurality of first guide rollers is fixedly supported; a plurality of second guide rollers installed below the plurality of first guide rollers between the pouch film inlet and the pouch film outlet to be spaced apart from each other, and configured to guide the pouch film; and an inclination measurement member provided on another side of each of the first guide rollers to measure at least one of a vertical inclination and a horizontal inclination of each of the first guide rollers.

The pouch film may be alternately guided by the first guide rollers and the second guide rollers to form a zigzag driving path between the pouch film inlet and the pouch film outlet.

Both sides of each of the second guide rollers may be fixedly installed below the first guide rollers, and at least one of the first guide rollers may be installed to be moved up or down with respect to the second guide rollers.

Each of the first guide rollers may include a roller part extending across a direction in which the pouch film is guided and configured to guide the pouch film, bearing parts installed at both sides of the roller part, and a first extension rod fixedly supported while protruding from the bearing part to the one side of each of the first guide rollers, and a second extension rod protruding toward the another side of each of the first guide rollers.

The inclination measurement member may be installed on the second extension rod.

The inclination measurement member may include at least one of a first inclination measurement member configured to measure the vertical inclination of each of the first guide rollers and a second inclination measurement member configured to measure the horizontal inclination of each of the first guide rollers.

The pouch film supply device of the present invention further includes an inclination adjustment member configured to adjust at least one of the vertical inclination or the horizontal inclination of each of the first guide rollers.

The pouch film supply device of the present invention may further include a support frame installed below the first guide rollers to be parallel with a direction in which the first guide rollers extend, and one side of the support frame may be fixedly supported on the same side as the one side of each of the first guide rollers and another side of the support frame may support the another side of each of the first guide rollers.

The inclination adjustment member may be installed on the another side of the support frame.

An upward extension part bent upward toward the first guide rollers may be provided at an end of the another side of the support frame, and an installation groove in which an extension rod of each of the first guide rollers is placed may be provided in an upper portion of the upward extension part.

In an embodiment, a height adjustment bolt may be installed to support the end of the another side of the each of the first guide rollers vertically by being passed through the upward extension part below the installation groove, the height adjustment bolt being configured to adjust a height.

In another embodiment, a horizontal inclination adjustment bolt may be installed to support the end of the another side of the each of the first guide rollers horizontally by being passed through upward extension part side walls at left and right sides of the installation groove, the horizontal inclination adjustment bolt being configured to adjust a position horizontally.

The pouch film supply device of the present invention may further include a monitoring part coupled to the inclination measurement member and configured to monitor at least one of a vertical inclination or horizontal inclination of each of the first guide rollers measured by the inclination measurement member, and an inclination adjustment member configured to adjusting at least one of the vertical inclination or the horizontal inclination of each of the first guide rollers. Thus, when a vertical inclination or horizontal inclination of each of the first guide rollers monitored by the monitoring part is out of a set range, at least one of the vertical inclination or the horizontal inclination of each of the first guide rollers may be adjustable by the inclination adjustment member.

In another embodiment, the pouch film supply device may include a lift frame on which the one side of at least one of the plurality of first guide rollers is fixedly supported, a driving part configured to move the lift frame up or down, and a lift guide extending vertically and configured to guide a upward or downward movement of the lift frame. A vertical distance between the first and second guide rollers may be changed by moving the lift frame up or down to adjust a length of the pouch film guided between the first and second guide rollers.

When a process after the pouch film outlet is interrupted or delayed, a controller may lift the lift frame to increase the vertical distance between the first and second guide rollers, thereby increasing a driving path of the pouch film guided between the first and second guide rollers.

### [Advantageous Effects]

According to the present invention, a vertical or horizontal inclination of a first guide roller supplying a pouch film can be measured to monitor and effectively manage verticality and a degree of parallelization of the first guide roller.

The vertical or horizontal inclination can be adjusted within a set range and thus the pouch film can be reliably prevented from being driven meanderingly.

In addition, a driving path of the pouch film can be adjusted by lifting the first guide roller to secure a maintenance time even when a problem occurs in a pouch film processing process or the like. Accordingly, a pouch film supply process can be performed without interruption and thus work productivity can be greatly improved.

### [Brief Description of the Drawings]

FIG. 1 is a schematic view of a general pouch type battery case forming device.
FIG. 2 is a schematic view of a pouch film supply device for a secondary battery according to a first embodiment.
FIG. 3 is a schematic view of a main part of the pouch film supply device for a secondary battery according to the first embodiment.
FIG. 4 illustrates a front cross-sectional view and a side cross-sectional view of a first guide roller.
FIG. 5 is a schematic view illustrating a process of adjusting a vertical inclination of the first guide roller.
FIG. 6 is a schematic view illustrating a process of supplying a pouch film by a pouch film supply device for a secondary battery according to the first embodiment.
FIG. 7 is a schematic view of a pouch film supply device for a secondary battery according to a second embodiment.
FIG. 8 is a schematic view of a main part of the pouch film supply device for a secondary battery according to the second embodiment.
FIG. 9 is a schematic view illustrating a process of adjusting a horizontal inclination of a first guide roller.
FIG. 10 is a schematic view of a main part of a pouch film supply device for a secondary battery according to a third embodiment.

### [Best Mode]

Hereinafter, the present invention will be described in detail. Before describing the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof. It should be understood that when a component such as a layer, a film, a region, a plate or the like is referred to as being "on" another component, the component is "right on" the other component or another component is interposed between these components. It should be understood that when a component such as a layer, a film, a region, a plate or the like is referred to as being "below" another component, the component is "right below" the other component or another component is interposed between these components. In addition, it should be understood that when a component is "on" another component, the component is on or below the other component.

Hereinafter, the present invention will be described in detail.

A pouch film supply device for a secondary battery according to the present invention includes a first guide roller, a second guide roller, and an inclination measurement member.

The first and second guide rollers are rollers that guide a pouch film to change a direction of the pouch film so as to increase or reduce a driving path of the pouch film. A plurality of first guide rollers and a plurality of second guide rollers are installed between a pouch film inlet and a pouch film outlet.

The pouch film inlet is a part through which the pouch film is introduced into the first guide roller or the second guide roller. When a pouch film supply device includes an outer housing, the pouch film inlet may be a slot passing through the outer housing. When the pouch film supply device includes frame, the pouch film inlet may be an open space between frameworks of the frame. When the pouch film supply device is installed in an open place without a housing or a frame, the pouch film inlet may simply be an open space into which the pouch film is introduced.

The pouch film outlet is a part through which the pouch film guided by the first or second guide roller is discharged toward in a subsequent process. When the pouch film supply device includes an outer housing, the pouch film outlet may be a slot passing through the outer housing. When the pouch film supply device includes a frame, the pouch film outlet may be an open space between frameworks of the frame. When the pouch film supply device is installed in an open place without a housing or a frame, the pouch film outlet may simply be an open space from which the pouch film is discharged.

Shapes of the pouch film inlet and the pouch film outlet are not limited thereto and may be variously changed according to the shape of a housing surrounding the pouch film supply device.

A plurality of first guide rollers are installed between the pouch film inlet and the pouch film outlet and spaced a certain distance from each other. The first guide roller is a cantilever type roller, one side of which is fixedly supported. The one side of the first guide roller may be fixedly installed on a fixed frame or a movable frame. A load of the first guide roller is concentrated on the one side thereof due to the structures of the first guide rollers when installed. To disperse or support the load, the fixed frame or the movable frame may be installed in a fixed structure such as an installation wall. Because the first guide roller is a cantilever type guide roller, another side thereof that is not fixedly supported may gradually sag downward as the pouch film is repeatedly guided. That is, a vertical inclination of each of the first guide rollers changes. The "vertical inclination" should be understood as a degree to which the each of first guide rollers is inclined upward or downward with respect to a horizontal direction. As the other side of each of the first guide rollers sags downward, an upward inclination of each of the first guide rollers gradually decreases and a downward inclination thereof gradually increases. Degrees to which the first guide rollers sag downward are different from each other and thus the upward or downward inclinations of the first guide rollers are slightly different. When the vertical inclinations are out of a set range, the pouch film may be driven meanderingly. Therefore, it is necessary to measure and monitor vertical inclinations of the first guide rollers as described below. Vertical inclinations of the first guide rollers may be adjusted within the set range according to a monitoring result. Ideally, the first guide roller can be completely horizontally oriented by setting a vertical inclination thereof to zero. However, according to the present invention, the first guide rollers are not necessarily strictly maintained horizontally. For example, the first guide roller may be set to have a vertical inclination relatively close to a horizontal line within a range in which meandering driving of a pouch film does not occur. That is, it is sufficient to manage an inclination angle of the first guide roller to fall within a set vertical inclination range. More importantly, vertical inclinations of a plurality of first guide rollers should be managed uniformly.

Because the first guide roller is a cantilever type guide roller, the other side thereof that is not fixedly supported may be slanted from side to side as the pouch film is repeatedly guided. That is, a horizontal inclination of the first guide roller changes. The "horizontal inclination" should be understood as a degree to which the first guide roller is inclined to the left or right in a vertical direction. Degrees to which the other sides of the first guide rollers are displaced leftward or rightward are different from each other and thus horizontal inclinations of the first guide rollers are slightly different. When the horizontal inclinations are out of a set range, the pouch film may be driven meanderingly. Therefore, it is necessary to measure and monitor the horizontal inclinations of the first guide rollers. In addition, horizontal inclinations of the first guide rollers may be adjusted within the set range according to a monitoring result. Ideally, a horizontal inclination of the first guide roller may be set to zero so that the one side and the other side of the first guide roller may be positioned to completely coincide with the vertical direction. However, goals of the present invention are not limited thereto, and for example, a horizontal inclination of the first guide roller may be set to be relatively close to zero within a range in which the pouch film is not driven meanderingly. It is more important to manage degrees of parallelization of the plurality of first guide rollers uniformly by maintain horizontal inclinations of the plurality of first guide rollers uniformly.

A plurality of second guide rollers are installed between the pouch film inlet and the pouch film outlet and are spaced a certain distance from each other. The second guide rollers are installed below the first guide rollers. Therefore, the pouch film is alternately guided by the first guide rollers at an upper location and the second guide rollers at a lower location. Because the pouch film is repeatedly guided by the first guide rollers at the upper location and the second guide rollers at the lower location, the pouch film is driven in a zigzag pattern between the pouch film inlet and the pouch film outlet. By forming a long zigzag-shaped driving path, the pouch film can be driven along a longer path in the same installation space. The second guide roller may be installed below a space between two adjacent first guide rollers installed at the upper location. Conversely, the first guide roller may be installed above a space between two adjacent second guide rollers installed at the lower location. Accordingly, the pouch films alternately guided by the first and second guide rollers may be effectively driven in the zigzag pattern.

Both sides of each of the second guide rollers are fixedly installed below the first guide rollers. For example, both sides of each of the second guide rollers may be fixed to a fixing jig installed at a bottom part. Because the second guide rollers are stably supported by the bottom part, the pouch film may be moved from the pouch film inlet to the pouch film outlet while stably maintaining the zigzag pattern.

A pouch film first introduced from the pouch film inlet may be guided by the first guide roller or the second guide roller depending on the number of the first guide rollers and the number of the second guide rollers. For example, when the number of the first guide rollers is greater than that of the second guide rollers, the pouch film may be guided first by one of the first guide rollers. In addition, a pouch film guided to the pouch film outlet may be guided by the first or second guide roller.

Alternatively, other guide rollers may be disposed before and after spaces in which the first guide rollers and the second guide rollers are arranged. For example, additional guide rollers may be disposed in a space between the pouch film inlet and the first and second guide rollers or a space between the pouch film outlet and the first and second guide rollers to adjust a direction in which the pouch film is discharged.

The first and second guide rollers may be driven rollers or drive rollers.

The first and second guide rollers each include a roller part that extends to cross a guide direction and guides the pouch film. The pouch film may be guided while crossing the roller part to change a direction.

A shaft extending in a direction in which the roller part extends is installed in the center of the roller part. The shaft and the roller part may be integrally coupled to rotate together when the shaft or the roller part rotates. When the shaft is rotated while connected to a driving part, the first and second guide rollers may be drive rollers. When the shaft is rotated by the rotation of the roller part, the first and second guide rollers are driven rollers.

Bearing parts are installed on both sides of the roller part. The bearing part may be, for example, a radial bearing part in which a bearing is positioned in a retainer part between an outer ring and an inner ring. The shaft may be inserted into the inner ring to rotate about the outer ring.

Extension rods may protrude from the outer ring of the bearing part to the one side or the other side of the first guide roller. The outer ring of the bearing part is not rotated regardless of the rotation of the roller part. Accordingly, the one side of the first guide roller may be fixedly supported by fixedly installing the extension rods protruding from the outer ring of the bearing part. Specifically, a first extension rod protruding from the outer ring of the bearing part to one side of the first guide roller may be fixedly supported. The first extension rod may be fixedly coupled to a fixed frame or a movable frame.

**In** addition, a second extension rod may protrude from the outer ring of the bearing part to the other side of the first guide roller. The second extension rod is not rotated regardless of the rotation of the roller part. An inclination measurement member to be described below may be installed on the second extension rod. The second extension rod may be supported by another support frame of the cantilever type.

When necessary, an inclination adjustment member to be described below may be installed on the support frame.

Similar to the first guide roller, the second guide roller may include first and second extension rods protruding from the bearing parts (outer rings) on both sides of the roller part.

The first and second extension rods provided at both sides of the second guide roller may be fixedly coupled to, for example, a fixing jig installed at the bottom part. Therefore, both sides of the second guide roller are stably supported by the bottom part to stably guide the pouch film.

The present invention includes an inclination measurement member on the other side of the first guide roller to measure at least one of a vertical inclination and a horizontal inclination of the first guide roller.

As described above, the inclination measurement member may be installed on a nonrotating part of the first guide roller, e.g., on the second extension rod extending from an outer ring of a bearing part on the other side of the roller part. Accordingly, the inclination measurement member is capable of stably measuring the vertical inclination or the horizontal inclination of the first guide roller.

The inclination measurement member may be an inclination sensor that measures a degree of inclination (slope) with respect to a reference plane. The inclination sensor measures an inclination angle of a surface to be measured by calculating an inclination angle from the behavior of a liquid or pendulum due to a force of gravity. Alternatively, a digital inclinometer may be employed as the inclination measurement member. The digital inclinometer may include a bubble machine therein to easily display an inclination of a surface, which is to be measured, in digits according to a change in the positions of bubbles relative to the surface to be measured. However, the inclination measurement member is not limited thereto, and other types of inclination measurement members may be employed as long as a vertical inclination or horizontal inclination of the first guide roller can be appropriately measured.

The inclination measurement member may include at least one of a first inclination measurement member configured to measure a vertical inclination of the first guide roller and a second inclination measurement member configured to measure a horizontal inclination of the first guide roller.

The pouch film supply device of the present invention may further include an inclination adjustment member to adjust at least one of the vertical inclination and the horizontal inclination of the first guide roller.

In addition, the pouch film supply device of the present invention may be configured to move the plurality of first guide rollers up or down, so that the length of the pouch film guided between the first and second guide rollers may be adjusted.

A shape and components of the pouch film supply device will be described in detail below with reference to the drawings and the following embodiments.

### [Embodiments of the Present Invention]

### (First Embodiment)

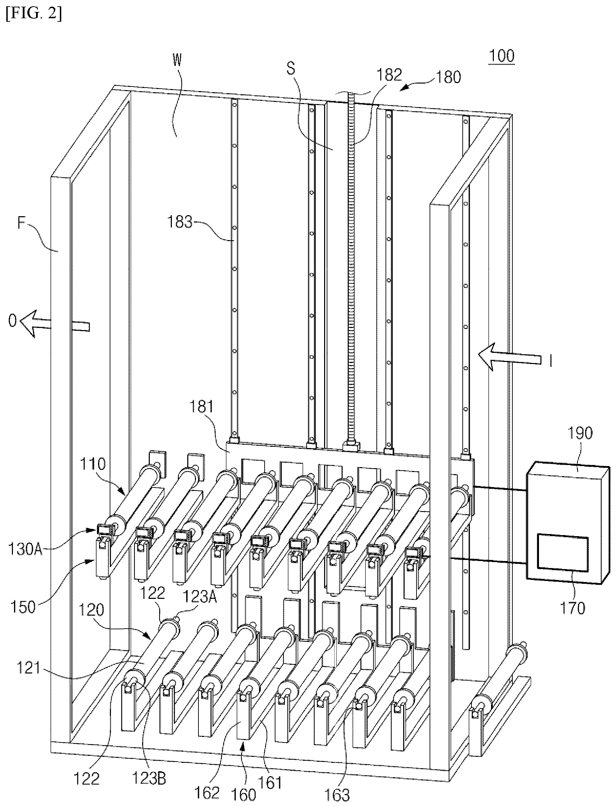

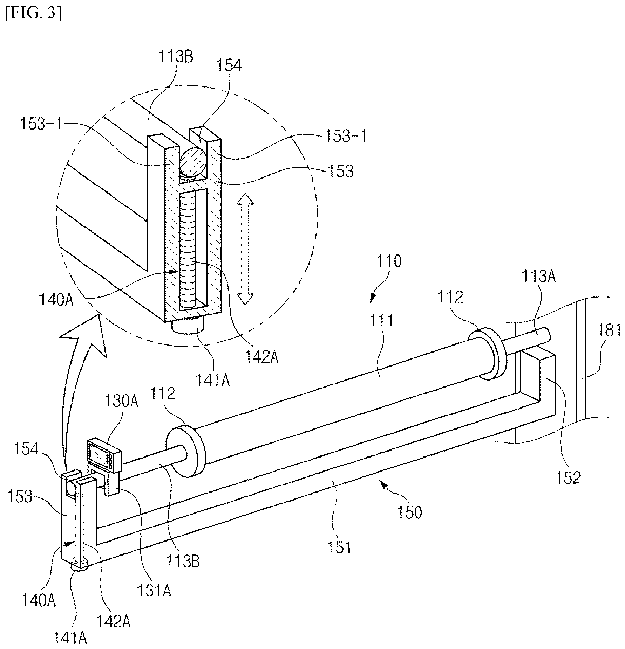

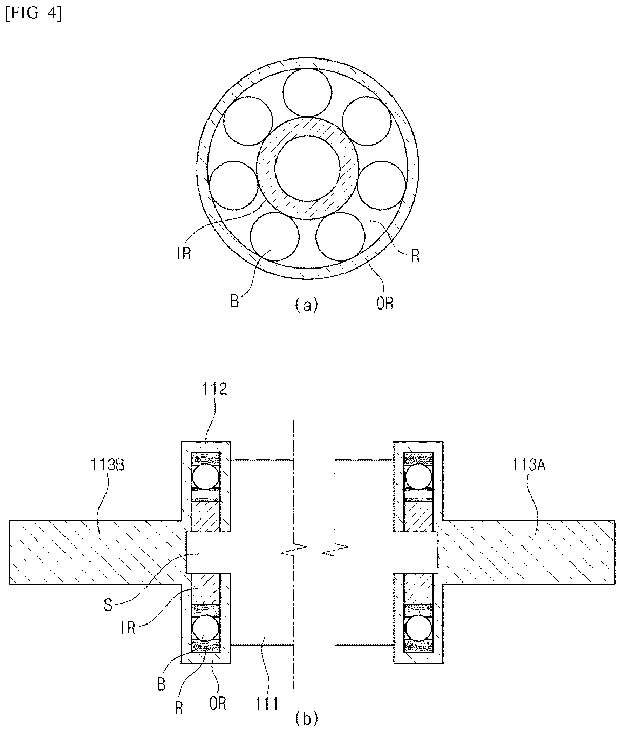

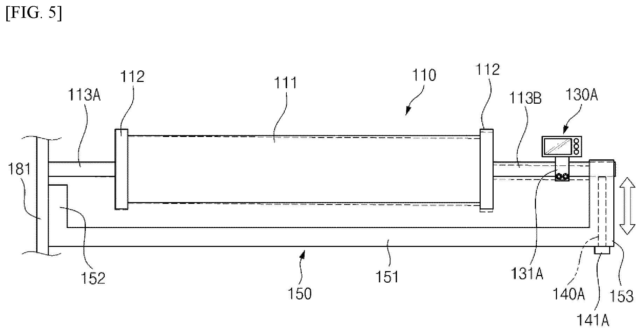

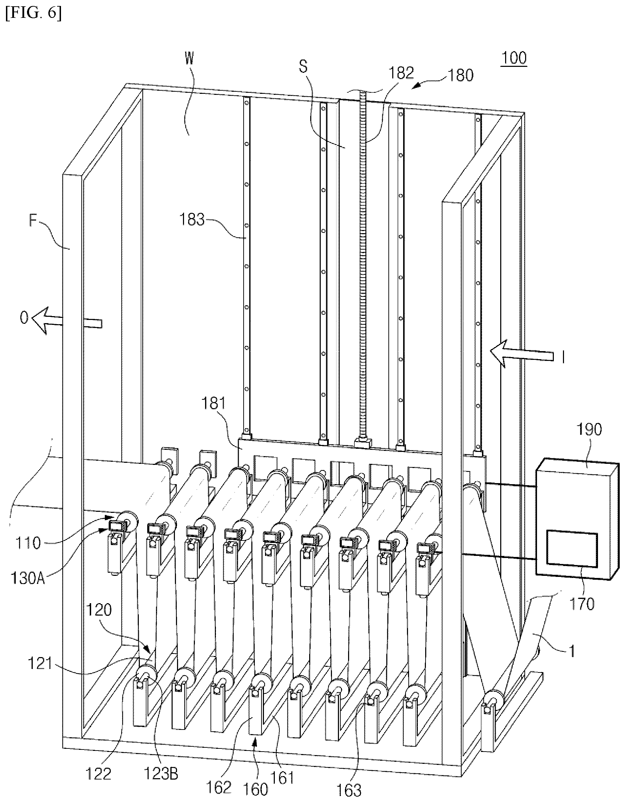

FIG. 2 is a schematic view of a pouch film supply device for a secondary battery according to a first embodiment. FIG. 3 is a schematic view of a main part of the pouch film supply device for a secondary battery according to the first embodiment. FIG. 4 illustrates a front cross-sectional view and a side cross-sectional view of a first guide roller. FIG. 5 is a schematic view illustrating a process of adjusting a vertical inclination of the first guide roller. FIG. 6 is a schematic view illustrating a process of supplying a pouch film by a pouch film supply device for a secondary battery according to the first embodiment.

As shown in FIG. 2, a pouch film supply apparatus 100 for a secondary battery of the present embodiment includes a frame F.

The frame F may be installed on a wall W of a factory building. In FIG. 2, the frame F is installed on left and right sides of the pouch film supply device 100 but may also be installed on a front side thereof. A pouch film 1 is supplied to and discharged from open spaces inside the left and right frames F. In the present embodiment, the pouch film 1 is moved from right to left. Therefore, the open space inside the right frame F is a pouch film inlet I, and the open space inside the left frame F is a pouch film outlet O.

First guide rollers 110 and second guide rollers 120 are installed vertically in a space between the left and right frames F. However, some guide rollers may be disposed outside the frames F according to a driving path of the pouch film 1. In FIG. 2, a rightmost second guide roller 120 is disposed outside the right frame F.

A plurality of second guide rollers 120 are installed at certain intervals from right to left between the pouch film inlet I and the pouch film outlet O. Both sides of each of the second guide rollers 120 are fixedly coupled to a fixing jig 160, and the fixing jig 160 is fixedly installed at a bottom part. That is, both sides of each of the second guide roller 120 may be fixedly installed below the first guide rollers 110 to stably guide the pouch film 1.

A plurality of first guide rollers 110 are installed on the second guide rollers 120 at certain intervals. Similarly, the first guide rollers 110 are installed from right to left between the pouch film inlet I and the pouch film outlet O in a direction in which the pouch film is moved.

As shown in FIG. 6, the pouch film 1 may be alternately guided by the first and second guide rollers 110 and 120, and a zigzag-shaped driving path may be formed between the pouch film inlet I and the pouch film outlet O.

Both sides of each of the second guide rollers 120 are fixedly installed below the first guide rollers 110, and all or some of the first guide rollers 110 may be installed to be moved up or down relative to the second guide rollers 120. In FIG. 2, six first guide rollers 110 among a total of eight first guide rollers 110 are installed to be moved up or down. When the first guide roller 110 is moved up or down, a distance between the first and second guide rollers 110 and 120 changes and thus a length of the pouch film 1 guided between the first and second guide rollers may be adjusted.

Unlike the second guide roller 120, both sides of which are fixed, the first guide roller 110 is a cantilever type guide roller, only one side of which is fixedly supported. As described above, when only one side of the first guide roller 110 is fixed, a lift mechanism 180 to be described below may be easily coupled to the first guide roller 110. That is, the first guide roller 110 may be easily lifted by coupling only the one side thereof to a lift frame 181 of the lift mechanism 180 and moving the lift frame 181 upward. In order to construct the lift frame 181 such that both sides of the first guide roller 110 are coupled thereto, a configuration of the lift frame 181 or the lift mechanism 180 connected to the lift frame 181 is complicated.

For maintenance of the like, the front of the other side of the first guide roller 110 should be open. Accordingly, the other side of the first guide roller 110 is not fixedly coupled to a structure such as the lift frame 181. However, the other side of the first guide roller 110 may be supported by an auxiliary frame such as a support frame 150 to be described below.

Configurations of the first and second guide rollers will be described in detail with reference to FIG. 4 below.

The first and second guide rollers 110 and 120 include roller parts 111 and 121 that extend to cross a guide direction and guide the pouch film 1. A shaft S extending in a direction in which a roller part extends protrudes from both ends of the center of the roller part. The shaft S and the roller parts 111 and 121 may be integrally coupled to rotate together when the shaft S or the roller parts 111 and 121 rotate. When the shaft S is rotated while connected to a driving part such as a motor, the first and second guide rollers 110 and 120 may be drive rollers. When the shaft is rotated by the rotation of the roller parts 111 and 121, the first and second guide rollers 110 and 120 are driven rollers. In the present embodiment, the first and second guide rollers 110 and 120 are driven rollers. Therefore, the pouch film 1 is guided by rotating the roller parts 111 and 121 of the first and second guide rollers 110 and 120, which are driven rollers, by the rotation of a drive roller (not shown) located before the pouch film inlet I or after the pouch film outlet O of the pouch film supply device 100 for a secondary battery of the present invention.

Bearing parts 112 and 122 are installed at both sides of the roller parts 111 and 121. The bearing parts 112 and 122 of the present embodiment are radial bearing parts in which a bearing B is located in a retainer part R between an outer ring OR and an inner ring IR. The shaft S may be inserted into the inner ring IR to rotate about the outer ring OR. An extension rod may protrude from the outer ring of each of the bearing parts 112 and 122 to one side of each of the first and second guide rollers and another side thereof. The outer ring of each of the bearing parts 112 and 122 is not rotated regardless of the rotation of a roller part. Accordingly, a guide roller is fixedly supported by fixedly installing an extension rod protruding from an outer ring of such a bearing part.

Specifically, a first extension rod 113A protruding from the outer ring OR of the bearing part to the one side of the first guide roller 110 may be fixedly supported on an installation wall W (or a fixed frame) or a movable frame (e.g., the lift frame 181). In addition, a second extension rod 113B may protrude from the outer ring OR of the bearing part to the other side of the first guide roller 110. Similarly, the second extension rod is not rotated regardless of the rotation of the roller part. Therefore, an inclination measuring member may be installed on the second extension rod 113B to stably measure an inclination of the first guide roller 110.

Similar to the first guide roller 110, the second guide roller 120 may include first and second extension rods 123A and 123B protruding from outer rings of the bearing parts on both sides of the roller part. The fixing jig 160 is installed below the second guide roller 120. The fixing jig 160 includes an upward extension part 162 on both sides or one side thereof. As shown in FIG. 2, the second extension rod 123B of the second guide roller 120 is coupled to an upward extension part 162 on a front end of the fixing jig 160. The upward extension part 162 includes a coupling groove 163, and the second extension rod 123B of the second guide roller 120 is coupled to the coupling groove 163. The first extension rod 123A of the second guide roller 120 may be coupled to an upward extension part on a rear end of the fixing jig 160 or the installation wall W.

Referring to FIGS. 2 and 3, a first inclination measurement member 130A is installed on the second extension rod 113B protruding to the other side of the first guide roller 110 to measure a vertical inclination.

As described above, the first inclination measurement member 130A may be an inclination sensor that measures a degree of inclination (slope) with respect to a reference plane or a digital inclinometer that includes a bubble machine and easily displays an inclination of a surface, which is to be measured, in digits according to a change of the positions of bubbles on the surface to be measured. To measure an upward or downward inclination of the second extension rod 113B, for example, the digital inclinometer is installed on an upper surface of the second extension rod 113B. To stably measure a vertical inclination, a first inclination measurement member jig 131A may be first coupled onto the second extension rod 113B, and the first inclination measurement member 130A may be installed on the first inclination measurement member jig 131A. An installation groove is formed in a lower part of the first inclination measurement member jig 131A to mount the first inclination measurement member jig 131A on the second extension rod 113B. The installation groove may have a circular shape, a V-shape or another shape to match the shape of the upper surface of the second extension rod 113B.

For example, an upward or downward inclination of the second extension rod 113B (and the roller part 111) is displayed on a screen of the first inclination measurement member 130A that is a digital inclinometer. Therefore, a vertical inclination of the first guide roller 110 may be identified in real time. Referring to FIG. 2, the first inclination measurement member 130A may be connected to a monitoring part 170 via wire or wirelessly. The monitoring part 170 may be a component included in a controller 190 that controls the transfer of a pouch film or the lift mechanism 180, which will be described below, of the first guide roller 110. The monitoring part 170 may be a computing system capable of establishing wired/wireless communication with a production management system of a factory. The monitoring part 170 may include a display part, and a vertical inclination of the first guide roller 110 measured by the first inclination measurement member 130A may be displayed on the display part in real time. As described above, according to the present invention, vertical inclinations of the first guide rollers 110 may be monitored in real time to quantitatively analyze a degree of sagging or sagging tendency of each of the first guide rollers 110. When monitored vertical inclinations are out of a set range, the vertical inclinations may be adjusted by an inclination adjustment member to uniformly adjust the vertical inclinations of the first guide rollers 110. Thus, meandering driving of the pouch film in the pouch film supply device 100 can be prevented. Accordingly, defects in a pouch forming part for processing the pouch film 1 supplied from the pouch film supply device 100 can also be prevented.

The pouch film supply device 100 of the present embodiment further includes an inclination adjustment member for adjusting a vertical inclination of the first guide roller 110. Referring to FIGS. 3 and 5, a height adjustment bolt 140A is illustrated as a vertical inclination adjustment member.

In particular, in the present embodiment, the support frame 150 is provided to support the other side of the first guide roller 110 and the height adjustment bolt. As shown in FIGS. 2, 3, and 5, a body part 151 of the support frame 150 is installed below the first guide roller 110 to be in parallel with the direction in which the first guide roller 110 extends. The support frame 150 is also a cantilever type frame, one side of which is fixedly supported at the same side as the one side of the first guide roller 110. Another side of the support frame 150 supports the other side of the first guide roller 110, i.e., the second extension rod 113B on an end of the other side of the first guide roller 110. Specifically, ends of the side and the other side of the support frame 150 are provided with upward extension parts 152 and 153 that are bent upward toward the first guide roller 110, respectively. Similar to the one side of the first guide roller 110, the upward extension part 152 on the end of the side of the support frame 150 is fixedly coupled to the installation wall W or the lift frame 181. The upward extension part 153 on the end of the other side of the support frame 150 supports the second extension rod 113B of the first guide roller 110. An installation groove 154 in which the second extension rod 113B of the first guide roller 110 is placed is formed at an upper portion of the upward extension part 153 on the end of the other side. As described above, the installation groove 154 of the support frame 150 supports the second extension rod 113B to prevent sagging of the first guide roller 110 or reduce a degree of sagging of the first guide roller 110. Although the support frame 150 is also a cantilever type structure, only one side of which is supported, the support frame 150 has higher rigidity than that of the first guide roller 110 and thus supports the other side of the first guide roller 110 to disperse a load applied to the first guide roller 110.

The inclination adjustment member is installed on the other side of the support frame 150. Specifically, the height adjustment bolt 140A extending vertically through the upward extension part 153 on the other end of the support frame 150 may be employed as the inclination adjustment member. The height adjustment bolt 140A is installed to pass through the upward extension part 153 below the installation groove 154. The inside of the upward extension part 153 may be hollow and thus the height adjustment bolt 140A may be inserted into the hollow inside. Therefore, a body part 142A of the height adjustment bolt 140A is inserted into the hollow inside. Insertion holes are formed in upper and lower portions of the upward extension part 153. An end of the body part 142A of the height adjustment bolt 140A is exposed through the upper insertion hole. The exposed end of the body part 142A protrudes from the installation groove 154 in the upper portion of the upward extension part 153. The second extension rod 113B of the first guide roller 110 is placed and supported on the exposed end of the body part 142A protruding from the installation groove 154.

The height adjustment bolt 140A passes through the insertion hole in the lower portion of the upward extension part 153 and is exposed through the lower portion of the upward extension part 153. A head part 141A of the height adjustment bolt 140A protrudes through a lower portion of the upward extension part 153. A screw hole may be formed in the insertion hole of the upward extension part into which the height adjustment bolt 140A is inserted, so that the height adjustment bolt 140A and the screw hole may be screw-coupled. Therefore, by rotating the height adjustment bolt 140A with respect to the screw hole, the height adjustment bolt 140A may be moved up or down. When the height adjustment bolt 140A is moved upward, the second extension rod 113B supported on the upper end of the body part 142A of the height adjustment bolt 140A is also moved upward, thus resulting in a change of a vertical inclination of the first guide roller 110. In FIG. 5, an example in which the vertical inclination of the first guide roller 110 is changed by adjusting the height adjustment bolt 140A vertically is shown by dotted lines and solid lines. For example, when an upward or downward inclination measured by the first inclination measurement member 130A is out of a set range, vertical inclinations of the plurality of first guide rollers 110 may be uniformly adjusted by the height adjustment bolt 140A within a range in which meandering does not occur.

In this case, the vertical inclinations of the first guide rollers 110 may be monitored by the monitoring part 170, and adjusted by allowing an operator to adjust the height adjustment bolt 140A when a monitoring result shows that the vertical inclinations of the first guide rollers 110 are out of the set range. When necessary, the vertical inclinations of the first guide rollers 110 may be adjusted by installing an alarm to be connected to the monitoring part 170, so that the alarm may go off when the vertical inclinations of the first guide rollers 110 are abnormal.

The pouch film supply device 100 for a secondary battery of the present embodiment further includes the lift mechanism 180 to moving the first guide roller 110 up or down.

For example, the lift mechanism 180 may include the lift frame 181 on which one side of at least one first guide roller 110 among the plurality of first guide rollers 110 is fixedly supported, a driving part configured to move the lift frame 181 up or down, and a lift guide 183 extending in the vertical direction and configured to guide the lift frame 181 to be moved up or down.

It is not necessary to move all of the first guide rollers 110 up or down, and a driving path of the pouch film between the first guide roller 110 and the second guide roller 120 may be changed simply by moving at least one first guide roller 110 up or down. In the present embodiment, six first guide rollers 110 are installed on the lift frame 181. The lift frame 181 is moved up or down by the driving part. The driving part may include a driving source (not shown) such as a motor, a ball screw 182 rotated by the driving source, and a screw coupling part configured to be screw-coupled to the ball screw 182. The screw coupling part is included in the lift frame 181. The driving part using a ball screw mechanism is generally known and thus a more detailed description thereof is omitted here. Alternatively, a linear movement mechanism may be employed in addition to the ball screw mechanism.

For stable up and down movement, the lift guide 183 is provided to guide a lifting operation. The lift guide 183 may be installed on the frame F or the installation wall W. A plurality of lift guides 183 may be provided. The ball screw 182 may be provided in an installation space S formed on the installation wall W. The lift frame 181 is moved up or down along the lift guide 183 installed on the installation wall W or the frame F.

Meanwhile, the controller 190 is connected to the lift mechanism 180 to control an up and down movement of the lift frame 181. The controller 190 may be a programmable logic controller (PLC) that controls the transfer of the pouch film 1. As described above, the controller 190 may include the monitoring part 170 connected to the inclination measurement member of the first guide roller 110. In addition, the controller 190 is data-communicatively connected to equipment in a process before the pouch film inlet I and/or a process after the pouch film outlet O. In particular, when a problem occurs in, for example, a pouch forming part in a process after the pouch film outlet O, a driving path of the pouch film 1 may be adjusted by adjusting up/down movement of the lift frame 181. For example, when the process after the pouch film outlet O is interrupted or delayed, the controller 190 lifts the lift frame 181 to increase a vertical distance between the first guide roller 110 and the second guide roller 120, thereby increasing the driving path of the pouch film 1 guided between the first and second guide rollers. Accordingly, it is possible to secure a maintenance time or a pouch film exchange time at a part after the pouch film outlet O. In addition, regardless of maintenance, the pouch film supply device 100 is capable of continuously receiving and transferring the pouch film 1, thus preventing unnecessary interruption of a preceding process due to a failure in a subsequent process. As described above, according to the present invention, overall work productivity can be significantly improved by preventing work loss in a subsequent process.

### (Second Embodiment)

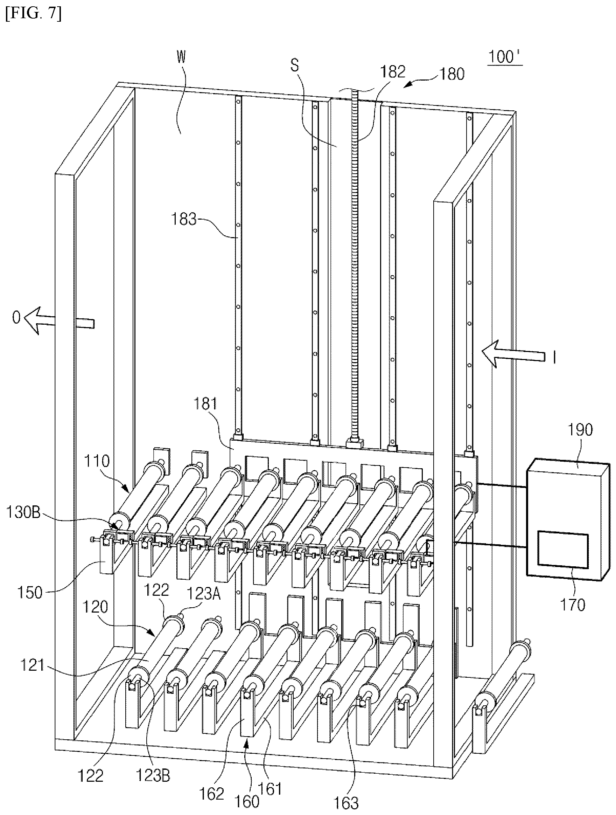

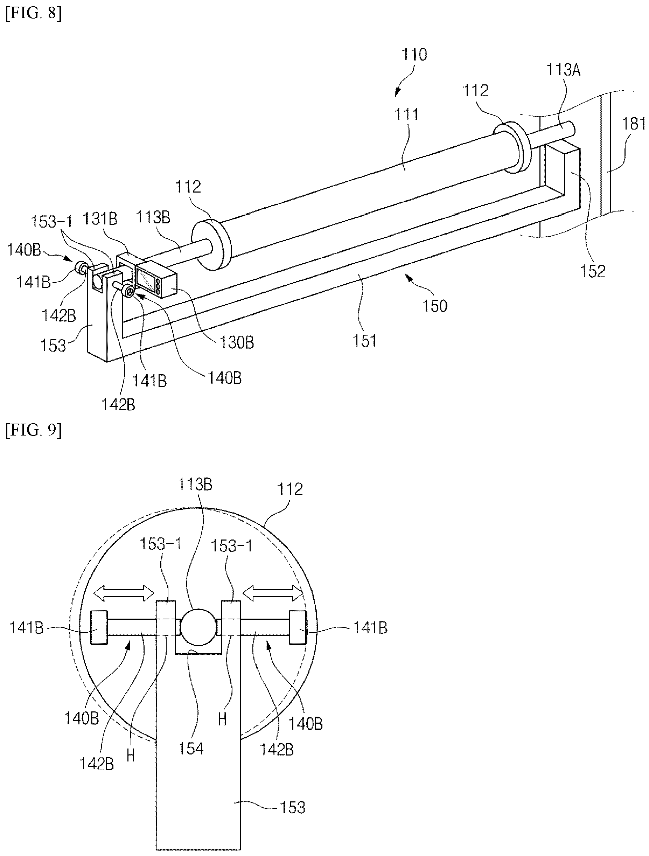

FIG. 7 is a schematic view of a pouch film supply device for a secondary battery according to a second embodiment. FIG. 8 is a schematic view of a main part of the pouch film supply device for a secondary battery according to the second embodiment. FIG. 9 is a schematic view illustrating a process of adjusting a horizontal inclination of a first guide roller.

A pouch film supply device 100' of the second embodiment is different from the first embodiment for measuring a vertical inclination, in that an inclination measurement member installed on a first guide roller 110 measures a horizontal inclination of the first guide roller 110. Accordingly, a configuration of a second inclination adjustment member for adjusting a horizontal inclination is different from that of a first inclination adjustment member for adjusting a vertical inclination.

In addition, configurations of first and second guide rollers 110 and 120, a lift mechanism 180, etc. are the same as those of the first embodiment. Components that are the same as those of the first embodiment are denoted by the same reference numerals and a detailed description thereof is omitted here.

The first guide roller 110 is a cantilever type guide roller, only one side of which is supported, and thus, another side thereof, i.e., a second extension rod 113B on the other side, may sag downward and be also moved to the left or the right due to a load applied when a pouch film is repeatedly transferred. That is, the one side and the other side of the first guide roller 110 do not exactly coincide with a vertical line and thus are inevitably slanted to the left or right. In the second embodiment, a pouch film may be prevented from being driven meanderingly by measuring a left inclination or right inclination of the first guide roller 110.

Referring to FIGS. 7 and 8, a second inclination measurement member 130B is installed on the second extension rod 113B of the first guide roller 110 to measure a horizontal inclination of the first guide roller 110. Unlike the first inclination measurement member 130A that measures a vertical inclination, the second inclination measurement member is installed on a side of the second extension rod 113B. To stably measure an inclination, the second inclination measurement member 130B is installed on a second inclination measurement member jig 131B. An installation groove is formed in a lower part of the second inclination measurement member jig 131B to mount the second inclination measurement member jig 131B on the second extension rod 113B. The installation groove may have a circular shape, a V-shape or another shape to match the shape of the side of the second extension rod 113B.

The second inclination measurement member 130B may be an inclination sensor that measures a degree of inclination (slope) with respect to a reference plane or a digital inclinometer that includes a bubble machine and easily displays an inclination of a surface, which is to be measured, in digits according to a change of the positions of bubbles on the surface to be measured.

For example, a left or right inclination of the second extension rod 113B (and a roller part) is displayed on a screen of the second inclination measurement member 130B that is a digital inclinometer. Therefore, a horizontal inclination of the first guide roller 110 may be identified in real time. Referring to FIG. 7, the second inclination measurement member 130B may be connected to a monitoring part 170 via wire or wirelessly. The monitoring part 170 may include a display part, and a horizontal inclination of the first guide roller 110 measured by the second inclination measurement member 130B may be displayed on the display part in real time. As described above, according to the present invention, horizontal inclinations of first guide rollers 110 may be monitored in real time to quantitatively analyze a degree of sagging or sagging tendency of each of the first guide rollers 110. When monitored horizontal inclinations are out of a set range, the horizontal inclinations may be adjusted by an inclination adjustment member to be described below and thus horizontal inclinations of the first guide rollers 110 may be adjusted uniformly. Thus, meandering driving of the pouch film in the pouch film supply device 100' can be prevented. Accordingly, defects in a pouch forming part for processing the pouch film supplied from the pouch film supply device 100' can also be prevented.

The pouch film supply device 100' of the present embodiment further includes a horizontal inclination adjustment bolt 140B to adjust a horizontal inclination of the first guide roller 110.

Referring to FIG. 8, an upward extension part 153 is provided at an end of another side of a cantilever-type support frame 150, and an installation groove 154 in which the second extension rod 113B of the first guide roller 110 is placed is formed in an upper portion of the upward extension part 153. The horizontal inclination adjustment bolt 140B is installed on the other side of the support frame 150. Specifically, the horizontal inclination adjustment bolt 140B is installed to extend horizontally while passing through upward extension part side walls 153-1 of the end of the other side of the support frame 150. The horizontal inclination adjustment bolt 140B is coupled to the upward extension part 153 to support a left side, a right side or both the left and right sides of the second extension rod 113B. In the present embodiment, a pair of horizontal inclination adjustment bolts 140B are provided on the left and right sides of the second extension rod 113B to support both the left and right sides of the second extension rod 113B.

In FIG. 9, a pair of horizontal inclination adjustment bolts 140B are screw-coupled to the upward extension part side walls 153-1 located at the left and right sides of the installation groove 154 of the upward extension part 153. Because the horizontal inclination adjustment bolt 140B supports the left and right sides of the first guide roller 110 horizontally while passing through the upward extension part side walls 153-1, a horizontal position of the second extension rod 113B between the horizontal inclination adjustment bolt 140B may be adjusted by changing a screwing position of the horizontal inclination adjustment bolt 140B relative to the upward extension part side walls 153-1. The horizontal inclination adjusting bolt 140B includes a head part 141B and a body part 142B, and the head part 141B protrudes toward the outside of the upward extension part.

An example in which a horizontal inclination of the first guide roller 110 is changed by the horizontal inclination adjustment bolt 140B is shown by dotted lines and solid lines. For example, when a horizontal inclination measured by the second inclination measurement member 130B is out of a set range, the horizontal inclination may be adjusted by the horizontal inclination adjustment bolt 140B to adjust horizontal inclinations of a plurality of first guide rollers 110 uniformly within a range in which meandering does not occur.

In this case, the horizontal inclinations of the first guide rollers 110 may be monitored by the monitoring part 170 and adjusted by allowing an operator to adjust the horizontal inclination adjustment bolt 140B according to a monitoring result.

### (Third Embodiment)

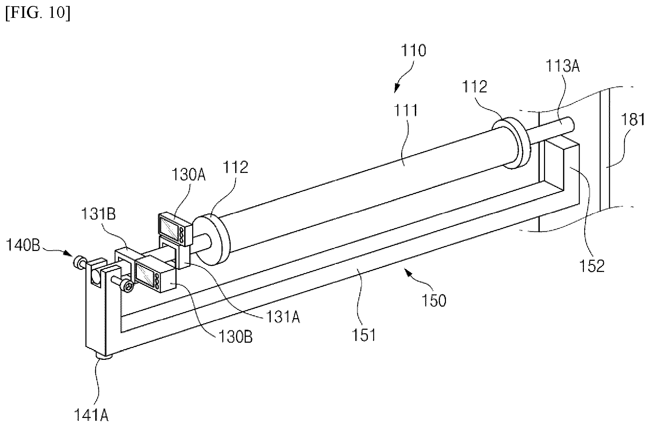

FIG. 10 is a schematic view of a main part of a pouch film supply device 100 for a secondary battery according to a third embodiment.

In the third embodiment, both the vertical inclination measurement member 130A of the first embodiment and the horizontal inclination measurement member 130B of the second embodiment are provided. Thus, both a vertical inclination and a horizontal inclination of a first guide roller 110 may be measured and monitored by a monitoring part 170.

In addition, both a height adjustment bolt 140A configured to adjust a vertical inclination and a horizontal inclination adjustment bolt 140B configured to adjust a horizontal inclination are provided.

Accordingly, when monitored vertical and horizontal inclinations are out of a set range, both vertical and horizontal inclinations of the first guide roller 110 may be adjusted by the height adjustment bolt 140A and the horizontal inclination adjustment bolt 140B. Therefore, according to the present embodiment, the pouch film guided by the first guide roller 110 can be more reliably prevented from being meandered.

### (Reference Numerals)

1: pouch film
100, 100': pouch film supply device
110: first guide roller
111: roller part
112: bearing part
113A: first extension rod
113B: second extension rod
120: second guide roller
121: roller part
122: bearing part
123A: first extension rod
123B: second extension rod
130A: first inclination measurement member
130B: second inclination measurement member
131A: first inclination measurement member jig
131B: second inclination measurement member jig
140A: first inclination adjustment member (height adjustment bolt)
141A: head part
142A: body part
140B: second inclination adjustment member (left and right inclination adjustment bolt)
141B: head part
142B: body part
150: support frame
151: support frame body
152: upward extension part
153: upward extension part
153-1: upward extension part side wall
154: installation groove
160: fixing jig
161: fixing jig body
162: upward extension part
163: coupling groove
170: monitoring part
180: lift mechanism
181: lift frame
182: ball screw
183: lift guide
190: controller

## Claims

1. A pouch film supply device (100, 100') for a secondary battery, comprising:
a plurality of first guide rollers (110) installed between a pouch film inlet and a pouch film outlet to be spaced apart from each other, and configured to guide a pouch film, wherein one side of each of the plurality of first guide rollers (110) is fixedly supported;
a plurality of second guide rollers (120) installed below the plurality of first guide rollers (110) between the pouch film inlet and the pouch film outlet to be spaced apart from each other, and configured to guide the pouch film; and
an inclination measurement member (130A, 130B) provided on another side of each of the first guide rollers (110) to measure at least one of a vertical inclination and a horizontal inclination of each of the first guide rollers (110),and,
an inclination adjustment member configured to adjust at least one of the vertical inclination or the horizontal inclination of each of the first guide rollers (110).

2. The pouch film supply device (100, 100') of claim 1, wherein the pouch film is alternately guided by the first guide rollers (110) and the second guide rollers (120) to form a zigzag driving path between the pouch film inlet and the pouch film outlet.

3. The pouch film supply device (100, 100') of claim 1, wherein both sides of each of the second guide rollers (120) are fixedly installed below the first guide rollers (110), and
at least one of the first guide rollers (110) is installed to be moved up or down with respect to the second guide rollers (120).

4. The pouch film supply device (100, 100') of claim 1, wherein each of the first guide rollers (110) comprises:
a roller part (111, 121) extending across a direction in which the pouch film is guided and configured to guide the pouch film;
bearing parts (112, 122) installed at both sides of the roller part (111, 121); and
a first extension rod (113A) fixedly supported while protruding from the bearing part (112, 122) to the one side of each of the first guide rollers (110), and a second extension rod (113B) protruding toward the another side of each of the first guide rollers (110).

5. The pouch film supply device (100, 100') of claim 4, wherein the inclination measurement member (130A, 130B) is installed on the second extension rod (113B).

6. The pouch film supply device (100, 100') of claim 5, wherein the inclination measurement member (130A, 130B) comprises at least one of a first inclination measurement member (130A) configured to measure the vertical inclination of each of the first guide rollers (110) and a second inclination measurement member (130B) configured to measure the horizontal inclination of each of the first guide rollers (110).

7. The pouch film supply device (100, 100') of claim 1, further comprising a support frame (150) installed below the first guide rollers (110) to be parallel with a direction in which the first guide rollers (110) extend, wherein one side of the support frame (150) is fixedly supported on the same side as the one side of each of the first guide rollers (110) and another side of the support frame (150) supports the another side of each of the first guide rollers (110).

8. The pouch film supply device (100, 100') of claim 7, wherein the inclination adjustment member is installed on the another side of the support frame (150).

9. The pouch film supply device (100, 100') of claim 8, wherein an upward extension part (152, 153) bent upward toward the first guide rollers (110) is provided at an end of the another side of the support frame (150), and
an installation groove (154) in which an extension rod of each of the first guide rollers (110) is placed is provided in an upper portion of the upward extension part (152, 153).

10. The pouch film supply device (100, 100') of claim 9, wherein a height adjustment bolt (140A) is installed to support the end of the another side of the each of the first guide rollers (110) vertically by being passed through the upward extension part (152, 153) below the installation groove (154), the height adjustment bolt (140A) being configured to adjust a height.

11. The pouch film supply device (100, 100') of claim 9, wherein a horizontal inclination adjustment bolt (140B) is installed to support the end of the another side of the each of the first guide rollers (110) horizontally by being passed through upward extension part (152, 153) side walls at left and right sides of the installation groove (154), the horizontal inclination adjustment bolt (140B) being configured to adjust a position horizontally.

12. The pouch film supply device (100, 100') of claim 1, further comprising:
a monitoring part (170) coupled to the inclination measurement member (130A, 130B) and configured to monitor at least one of a vertical inclination or horizontal inclination of each of the first guide rollers (110) measured by the inclination measurement member (130A, 130B); and
an inclination adjustment member (140A, 140B) configured to adjusting at least one of the vertical inclination or the horizontal inclination of each of the first guide rollers (110),
wherein, when a vertical inclination or horizontal inclination of each of the first guide rollers (110) monitored by the monitoring part (170) is out of a set range, at least one of the vertical inclination or the horizontal inclination of each of the first guide rollers (110) is adjustable by the inclination adjustment member.

13. The pouch film supply device (100, 100') of any one of claims 1 to 12, further comprising:
a lift frame (181) on which the one side of at least one of the plurality of first guide rollers (110) is fixedly supported;
a driving part configured to move the lift frame (181) up or down; and
a lift guide (183) extending vertically and configured to guide a upward or downward movement of the lift frame (181),
wherein a vertical distance between the first and second guide rollers (120) is changed by moving the lift frame (181) up or down to adjust a length of the pouch film guided between the first and second guide rollers (120).

14. The pouch film supply device (100, 100') of claim 13, wherein a driving path of the pouch film guided between the first and second guide rollers (110, 120) is increased by increasing the vertical distance between the first and second guide rollers (110, 120) by lifting the lift frame (181) by a controller (190), when a process after the pouch film outlet is interrupted or delayed.

## Patentansprüche

1. Pouchfolien-Fördervorrichtung (100, 100') für eine Sekundärbatterie, umfassend:
eine Vielzahl von ersten Führungsrollen (110), die in einem Abstand voneinander zwischen einem Pouchfolien-Einlass und einem Pouchfolien-Auslass angeordnet und zum Führen einer Pouchfolie konfiguriert sind, wobei eine Seite der Vielzahl von ersten Führungsrollen (110) fest gelagert ist;
eine Vielzahl von zweiten Führungsrollen (120), die unterhalb der Vielzahl von ersten Führungsrollen (110) zwischen dem Pouchfolien-Einlass und dem Pouchfolien-Auslass in einem Abstand zueinander angeordnet und so konfiguriert sind, dass sie die Pouchfolie führen; und
ein Neigungsmesselement (130A, 130B), das an einer anderen Seite der jeweiligen ersten Führungsrollen (110) vorgesehen ist, um zumindest eine vertikale Neigung und/oder eine horizontale Neigung der jeweiligenersten Führungsrollen (110) zu messen, und
ein Neigungs-Stellelement, zu Einstellen zumindest der vertikalen Neigungen und/oder horizontalen Neigungen der ersten Führungsrollen (110).

2. Pouchfolien-Fördervorrichtung (100, 100') nach Anspruch 1, wobei die Pouchfolie abwechselnd von den ersten Führungsrollen (110) und den zweiten Führungsrollen (120) geführt wird, um einen Zickzack-Förderweg zwischen dem Pouchfolien-Einlass und dem Pouchfolien-Auslass zu bilden.

3. Pouchfolien-Fördervorrichtung (100, 100') nach Anspruch 1, wobei beide Seiten der zweiten Führungsrollen (120) fest unterhalb der ersten Führungsrollen (110) angebracht sind, und
zumindest eine der ersten Führungsrollen (110) relativ zu den zweiten Führungsrollen (120) auf oder ab beweglich angebracht ist.

4. Pouchfolien-Fördervorrichtung (100, 100') nach Anspruch 1, wobei die ersten Führungsrollen (110) je umfassen:
einen Rollenteil (111, 121), der sich quer zu einer Richtung erstreckt, in der die Pouchfolie geführt wird, und der zum Führender Pouchfolie ausgebildet ist;
Lagerteile (112, 122), die an beiden Seiten des Rollenteils (111, 121) angebracht sind; und
ein erster Verlängerungsstab (113A), der fest gelagert ist und aus dem Lagerteil (112, 122) zu einer Seite der jeweiligen ersten Führungsrollen (110) herausragt, und ein zweiter Verlängerungsstab (113B), der jeweils zur anderen Seite der ersten Führungsrollen (110) herausragt.

5. Pouchfolien-Fördervorrichtung (100, 100') nach Anspruch 4, wobei das Neigungsmesselement (130A, 130B) am zweiten Verlängerungsstab (113B) angebracht ist.

6. Pouchfolien-Fördervorrichtung (100, 100') nach Anspruch 5, wobei das Neigungsmesselement (130A, 130B) zumindest eines der folgenden Elemente umfasst: ein erstes Neigungsmesselement (130A), das zum Messen der vertikalen Neigung der jeweiligen ersten Führungsrollen (110) konfiguriert ist, und ein zweites Neigungsmesselement (130B), das zum Messen der horizontalen Neigung der ersten Führungsrollen (110) jeweiligen konfiguriert ist.

7. Pouchfolien-Fördervorrichtung (100, 100') nach Anspruch 1, die ferner einen Stützrahmen (150) umfasst, der derart unterhalb der ersten Führungsrollen (110) angebracht ist, dass er parallel zu einer Richtung verläuft, in der sich die ersten Führungsrollen (110) erstrecken, wobei eine Seite des Stützrahmens (150) auf derselben Seite wie die eine Seite der jeweiligen ersten Führungsrollen (110) fest abgestützt ist und eine andere Seite des Stützrahmens (150) die andere Seite der jeweiligen ersten Führungsrollen (110) abstützt.

8. Pouchfolien-Fördervorrichtung (100, 100') nach Anspruch 7, wobei das Neigungs-Stellelement auf der anderen Seite des Stützrahmens (150) angebracht ist.

9. Pouchfolien-Fördervorrichtung (100, 100') nach Anspruch 8, wobei an einem Ende der anderen Seite des Stützrahmens (150) ein nach oben gerichteter Verlängerungsabschnitt (152, 153) vorgesehen ist, der nach oben in Richtung der ersten Führungsrollen (110) gebogen ist, und
in einem oberen Abschnitt des nach oben ragenden Abschnitts (152, 153) eine Einstecknut (154) vorgesehen ist, in die ein Verlängerungsstab der jeweiligen ersten Führungsrollen (110) eingesetzt wird.

10. Pouchfolien-Fördervorrichtung (100, 100') nach Anspruch 9, wobei eine Höhen-Stellschraube (140A) angebracht ist, um das Ende der anderen Seite der jeweiligen ersten Führungsrollen (110) vertikal zu stützen, indem sie durch den nach oben ragenden Abschnitt (152, 153) unterhalb der Einstecknut (154) geführt wird, wobei die Höhen-Stellschraube (140A) zum Einstellen einer Höhe ausgebildet ist.

11. Pouchfolien-Fördervorrichtung (100, 100') nach Anspruch 9, wobei eine Schraube (140B) zur Einstellung der horizontalen Neigung vorgesehen ist, um das Ende der jeweils anderen Seite der ersten Führungsrollen (110) horizontal zu stützen, indem sie durch die Seitenwände des nach oben ragenden Abschnitts (152, 153) an der linken und rechten Seite der Einbaunut (154) geführt wird, wobei die horizontale Neigungs-Stellschraube (140B) zum Einstellen einer horizontalen Stellung ausgebildet ist.

12. Pouchfolien-Fördervorrichtung (100, 100') nach Anspruch 1, ferner umfassend:
einen Überwachungsabschnitt (170), der mit dem Neigungsmesselement (130A, 130B) gekoppelt und so ausgebildet ist, dass er zumindest die vertikale und/oder horizontalen Neigung der jeweiligen ersten Führungsrollen (110) überwacht, die durch das Neigungsmesselement (130A, 130B) gemessen werden; und
ein Neigungs-Stellelement (140A, 140B), das zumindest die vertikale und/oder horizontale Neigungen der jeweiligen ersten Führungsrollen (110) einstellt,
wobei, wenn eine vertikale oder horizontale Neigung der jeweiligen ersten von dem Überwachungsteil (170) überwachten Führungsrollen (110), außerhalb eines festgelegten Bereichs liegt, zumindest eine vertikale und/oder horizontale Neigung der jeweiligen ersten Führungsrollen (110) durch das Neigungs-Stellelement einstellbar ist.

13. Pouchfolien-Fördervorrichtung (100, 100') nach einem der Ansprüche 1 bis 12, ferner umfassend:
einen Hubrahmen (181), an dem eine Seite zumindest einer der mehreren ersten Führungsrollen (110) fest gelagert ist;
einen Antriebsteil zum Auf- oder Ab-Bewegen des Hubrahmens (181); und
eine sich vertikal erstreckende Hubführung (183), zum Führen einer Aufwärts- oder Abwärtsbewegung des Hubrahmens (181),
wobei ein vertikaler Abstand zwischen der ersten und der zweiten Führungsrolle (120) durch Auf- oder Ab-Bewegen des Hubrahmens (181) verändert wird, um eine Länge der zwischen der ersten und der zweiten Führungsrolle (120) geführten Pouchfolie einzustellen.

14. Pouchfolien-Fördervorrichtung (100, 100') nach Anspruch 13, wobei ein Förderweg der zwischen der ersten und der zweiten Führungsrolle (110, 120) geführten Pouchfolie vergrößert wird, indem der vertikale Abstand zwischen der ersten und der zweiten Führungsrolle (110, 120) durch Anheben des Hubrahmens (181) mittels einer Steuerung (190) angehoben wird, wenn ein Vorgang nach dem Austritt der Pouchfolie unterbrochen oder verzögert wird.

## Revendications

1. Distributeur de film de sac (100, 100') pour une batterie secondaire, comprenant :
une pluralité de premiers rouleaux de guidage (110) installés entre une entrée du film de poche et une sortie du film de poche, devant être espacés l'un de l'autre, et configurés pour guider un film de poche, un côté de chacun de la pluralité de premiers rouleaux de guidage (110) étant supporté fixement ;
une pluralité de deuxièmes rouleaux de guidage (120) installés sous la pluralité de premiers rouleaux de guidage (110) entre l'entrée du film de poche et la sortie du film de poche, devant être espacés l'un de l'autre, et configurés pour guider le film de poche ; et
un dispositif de mesure de l'inclinaison (130A, 130B) agencé sur un autre côté de chacun des rouleaux de guidage (110) pour mesurer au moins une d'une inclinaison verticale et d'une inclinaison horizontale de chacun des rouleaux de guidage (110), et
un dispositif de mesure de l'inclinaison configuré pour ajuster au moins une de l'inclinaison verticale ou de l'inclinaison horizontale de chacun des premiers rouleaux de guidage (110).

2. Distributeur de film de sac (100, 100') selon la revendication 1, le film de poche étant guidé alternativement par les premiers rouleaux de guidage (110) et les deuxièmes rouleaux de guidage (120), pour former un chemin de circulation en zigzag entre l'entrée du film de poche et la sortie du film de poche.

3. Distributeur de film de sac (100, 100') selon la revendication 1, les deux côtés de chacun des deuxièmes rouleaux de guidage (120) étant installés fixement sous les premiers rouleaux de guidage (110), et
au moins un des premiers rouleaux de guidage (110) étant installé pour être déplacé en haut ou en bas relativement aux deuxièmes rouleaux de guidage (120).

4. Distributeur de film de sac (100, 100') selon la revendication 1, chacun des premiers rouleaux de guidage (110) comprenant :
une partie de rouleau (111, 121) s'étendant à travers une direction dans laquelle le film de poche est guidé, et configurée pour guider le film de poche ;
des parties de roulement (112, 122) installées des deux côtés de la partie de rouleau (111, 121) ; et
une première tige d'extension (113A) supportée fixement tout en dépassant de la partie de roulement (112, 122) vers l'un côté de chacun des premiers rouleaux de guidage (110), et une deuxième tige d'extension (113B) saillante vers l'un autre côté de chacun des premiers rouleaux de guidage (110).

5. Distributeur de film de sac (100, 100') selon la revendication 4, le dispositif de mesure de l'inclinaison (130A, 130B) étant installé sur la deuxième tige d'extension (113B).

6. Distributeur de film de sac (100, 100') selon la revendication 5, le dispositif de mesure de l'inclinaison (130A, 130B) comprenant au moins un d'un premier dispositif de mesure de l'inclinaison (130A) configuré pour mesurer l'inclinaison verticale de chacun des premiers rouleaux de guidage (110), et un deuxième dispositif de mesure de l'inclinaison (130B) configuré pour mesurer l'inclinaison horizontale de chacun des premiers rouleaux de guidage (110).

7. Distributeur de film de sac (100, 100') selon la revendication 1, comprenant en outre un châssis de support (150) installé sous les premiers rouleaux de guidage (110) afin d'être parallèle à une direction d'extension des premiers rouleaux de guidage (110), un côté du châssis de support (150) étant supporté fixement sur le même côté que l'un côté de chacun des premiers rouleaux de guidage (110), et un autre côté du châssis de support (150) supportant l'un autre côté de chacun des premiers rouleaux de guidage (110).

8. Distributeur de film de sac (100, 100') selon la revendication 7, le dispositif d'ajustage de l'inclinaison étant installé sur l'un autre côté du châssis de support (150).

9. Distributeur de film de sac (100, 100') selon la revendication 8, une partie d'extension vers le haut (152, 153) pliée vers le haut en direction des premiers rouleaux de guidage (110) étant agencée à un bout de l'un autre côté du châssis de support (150), et
une rainure d'installation (154), dans laquelle une tige d'extension de chacun des premiers rouleaux de guidage (110) est placée, étant agencée dans une partie supérieure de la partie d'extension vers le haut (152, 153).

10. Distributeur de film de sac (100, 100') selon la revendication 9, un boulon de réglage de la hauteur (140A) étant installé pour supporter le bout de l'un autre côté de chacun des premiers rouleaux de guidage (110) verticalement en le faisant passer à travers la partie d'extension vers le haut (152, 153) sous la rainure d'installation (154), le boulon de réglage de la hauteur (140A) étant configuré pour ajuster une hauteur.

11. Distributeur de film de sac (100, 100') selon la revendication 9, un boulon de réglage de l'inclinaison horizontale (140B) étant installé pour supporter le bout de l'un autre côté de chacun des premiers rouleaux de guidage (110) horizontalement en le faisant passer à travers des parois latérales de la partie d'extension vers le haut (152, 153) des côtés gauche et droit de la rainure d'installation (154), le boulon de réglage de l'inclinaison horizontale (140B) étant configuré pour ajuster une position horizontalement.

12. Distributeur de film de sac (100, 100') selon la revendication 1, comprenant en outre :
un élément de contrôle (170) couplé au dispositif de mesure de l'inclinaison (130A, 130B), et configuré pour contrôler au moins une d'une inclinaison verticale ou d'une inclinaison horizontale de chacun des premiers rouleaux de guidage (110) mesurés par le dispositif de mesure de l'inclinaison (130A, 130B) ;
et
un dispositif de mesure de l'inclinaison (140A, 140B) configuré pour ajuster au moins une de l'inclinaison verticale ou de l'inclinaison horizontale de chacun des premiers rouleaux de guidage (110),
de sorte que lorsqu'une inclinaison verticale ou une inclinaison horizontale de chacun des premiers rouleaux de guidage (110), contrôlés par l'élément de contrôle (170), est hors d'une plage définie, au moins une de l'inclinaison verticale ou de l'inclinaison horizontale de chacun des premiers rouleaux de guidage (110) peut être ajustée par le dispositif de mesure de l'inclinaison.

13. Distributeur de film de sac (100, 100') selon une quelconque des revendications 1 à 12, comprenant en outre :
un cadre de levage (181) sur lequel l'un côté d'au moins un de la pluralité des premiers rouleaux de guidage (110) est supporté fixement ;
une partie motrice configurée pour déplacer le cadre de levage (181) en haut ou en bas ; et
un guide de levage (183) s'étendant verticalement, et configuré pour guider un déplacement vers le haut ou vers le bas du cadre de levage (181),
une distance verticale entre les premiers et deuxièmes rouleaux de guidage (120) pouvant être variée en déplaçant en haut ou en bas le cadre de levage (181) pour ajuster une longueur du film de poche guidé entre les premiers et deuxièmes rouleaux de guidage (120).

14. Distributeur de film de sac (100, 100') selon la revendication 13, un chemin d'entraînement du film de poche guidé entre les premiers et deuxièmes rouleaux de guidage (110, 120) pouvant être accru en augmentant la distance verticale entre les premiers et deuxièmes rouleaux de guidage (110, 120), en soulevant le cadre de levage (181) à l'aide d'un régulateur (190) lors de l'interruption ou de la temporisation d'un processus après la sortie du film de poche.
